# EUROPÄISCHE PATENTANMELDUNG

(11) **EP 3 616 797 A1**
(43) Veröffentlichungstag der Anmeldung: **04.03.2020**
(21) Anmeldenummer: 19192077.6
(22) Anmeldetag: 16.08.2019
(51) Int. Cl.: B05B 15/62, A47K 5/12, G01F 11/02, B65D 83/00

(54) **SPENDERSYSTEM ZUM AUSGEBEN EINES MEDIUMS ZUR HAUTREINIGUNG UND/ODER HAUTPFLEGE**

(30) Priorität: 27.08.2018 DE 102018120827
(71) Anmelder: Hübner GmbH & Co. KG, 34123 Kassel (DE)
(72) Erfinder: Roloff, Jan-Johannes, 34125 Kassel (DE); Truppel, Tino, 34132 Kassel (DE); Wiegrefe, Andreas, 36039 Fulda (DE)

(57) **Zusammenfassung**

Die Erfindung betrifft ein Spendersystem (1) zum Ausgeben eines flüssigen, pastösen oder aufschäumbaren Mediums zur Hautreinigung und/oder Hautpflege in Abhängigkeit von einer Betätigung des Spendersystems (1). Das Spendersystem (1) umfasst ein Gehäuse (2), das eine Ausnehmung (3) für einen Behälter (5) mit dem Medium aufweist, sowie eine Abdeckung (4), die an dem Gehäuse (2) beweglich und/oder lösbar befestigt ist und die Ausnehmung (3) für den Behälter (5) mit dem Medium abdeckt. Ferner umfasst das Spendersystem eine Ausgabeeinheit (9), durch die das Medium in Abhängigkeit von einer Betätigung der Betätigungseinheit (10) durch einen Nutzer ausgebbar ist. Erfindungsgemäß weist das Spendersystem (1) ein Befestigungsmittel (15) auf, das derart ausgebildet ist, dass das Spendersystem (1) am Nutzer und/oder an dessen Kleidung befestigbar ist.

## Beschreibung

Die Erfindung betrifft ein Spendersystem zum Ausgeben eines flüssigen, pastösen oder aufschäumbaren Mediums zur Hautreinigung und/oder Hauptpflege mit den Merkmalen des Oberbegriffs von Anspruch 1.

### STAND DER TECHNIK

Ein Spendersystem umfasst üblicherweise ein Gehäuse, in das ein Behälter mit einem Medium zur Hautreinigung und/oder Hautpflege einsetzbar und das anschließend mit einer Abdeckung verschließbar ist. Um Medium ausgeben zu können, weist der Behälter einen Stutzen auf, der mit einer Ausgabeeinheit des Spendersystems verbindbar ist. Z. B. kann es sich bei der Ausgabeeinheit um eine Saug- oder Balgpumpe handeln, die auf den Stutzen aufschraubbar oder aufsteckbar ist. Um Medium aus dem Behälter zu entnehmen, wird die Ausgabeeinheit betätigt.

Derartige Spendersysteme sind üblicherweise für eine Wandmontage ausgelegt. Hierzu sind in einer hinteren Gehäusewandung Schraublöcher vorgesehen, so dass das Gehäuse und somit das Spendersystem an eine Wand durch Verschraubung montiert werden kann. Dabei ist die Wandmontage mit einer festen Orientierung der Ausgabeeinheit nach unten wichtig für die Funktionsweise des Spendersystems. Hierdurch wird nämlich erreicht, dass das auszugebende Medium aufgrund der darauf wirkenden Schwerkraft in Richtung der Ausgabeeinheit fließt und durch diese schließlich ausgegeben werden kann. Beispiele für derartige Spendersysteme sind aus den Dokumenten EP 2 384 677 B1, DE 10 2011 116 811 B4 und DE 10 2014 007 518 B4 bekannt.

### OFFENBARUNG DER ERFINDUNG

Aufgabe der Erfindung ist es, ein Spendersystem vorzuschlagen, das hinsichtlich der Handhabung vereinfacht ist.

Die erfindungsgemäße Aufgabe wird gelöst durch ein Spendersystem mit den Merkmalen des unabhängigen Anspruchs 1.

Im Krankenhausbereich werden die aus dem Stand der Technik bekannten Spendersysteme typischerweise im Bereich der Eingangstüren zu Krankenzimmern angeordnet, so dass sich das Personal beim Betreten des Krankenzimmers die Hände desinfizieren kann. Nun kann es dazu kommen, dass es im Rahmen der Behandlung von Patienten notwendig ist, sich erneut die Hände zu desinfizieren. Hierzu muss das Personal wieder zur Eingangstür gehen. Insbesondere in Notfällen kann es passieren, dass der damit einhergehende Zeitverlust nicht in Kauf genommen werden kann. Vielmehr wird stattdessen auf eine eigentlich erforderliche erneute Desinfektion der Hände verzichtet. Es muss also abgewogen werden, ob Abstriche bei der Hygiene oder bei einer zügigen Behandlung gemacht werden.

Der Erfindung liegt die Erkenntnis zugrunde, dass dieser Zielkonflikt gelöst werden kann, wenn ein Nutzer ein Spendersystem immer bei sich tragen kann. Insbesondere sollte er das Spendersystem so bei sich tragen können, dass es jederzeit einsatzbereit ist und der Nutzer somit nach Bedarf das Spendersystem nutzen kann. Erfindungsgemäß ist daher vorgesehen, das Spendersystem mit einem Befestigungsmittel auszustatten, das derart ausgebildet ist, dass der Nutzer das Spendersystem an sich bzw. an seiner Kleidung befestigen und so immer mit sich führen und nach Bedarf verwenden kann.

Mit einem erfindungsgemäßen Spendersystem können flüssige, pastöse oder aufschäumbare Medien zur Hautreinigung und/oder Hautpflege ausgegeben werden. Bei den Medien kann es sich z. B. um Flüssigseife, Desinfektionsmittel, Hautschutzpaste oder -creme handeln. Das Ausgeben des Mediums kann dabei manuell oder automatisch erfolgen, d. h. ein etwaiger Pumpmechanismus muss nicht zwingend manuell ausgeführt werden. Vielmehr kann das Medium nach einer z. B. berührungslosen Betätigung des Spendersystems auch automatisch ausgegeben werden.

Das Spendersystem umfasst ein Gehäuse mit einer Ausnehmung, in die ein Behälter mit dem Medium aufgenommen werden kann. Die Ausnehmung wird dabei durch eine Abdeckung abgedeckt, welche beweglich und/oder lösbar an dem Gehäuse befestigt ist. Beispielsweise kann die Abdeckung verschwenkbar an dem Gehäuse aufgenommen sein, so dass die Abdeckung von einer geöffneten Stellung, in der die Ausnehmung und ein ggf. darin aufgenommener Behälter zugänglich ist, in eine geschlossene Stellung, in der kein direkter Zugang zu der Ausnehmung möglich ist, bewegt werden kann. Konkret kann die Abdeckung durch ein Filmscharnier oder gelenkig an dem Gehäuse befestigt sein. Alternativ oder zusätzlich kann die Abdeckung komplett von dem Gehäuse gelöst werden. Z. B. kann die Abdeckung an dem Gehäuse verschraubt und/oder verrastet sein.

Um Medium ausgeben lassen zu können, weist das Spendersystem eine Betätigungseinheit auf, die ein Nutzer betätigen kann, wenn er dem Spendersystem Medium entnehmen möchte. Es kann sich hierbei um eine berührungslos oder manuell betätigbare Betätigungseinheit handeln. Z. B. kann die Betätigungseinheit einen Sensor aufweisen, mit dem berührungslos erfasst wird, ob der Nutzer z. B. seine Hand annähert, was darauf hinweist, dass er Medium entnehmen möchte. Es kann sich aber auch um einen Druckknopf o. ä. handeln, mit dessen Betätigung der Nutzer die Ausgabe von Medium auslöst. Infolge einer Betätigung der Betätigungseinheit wird das Medium schließlich mittels einer Ausgabeeinheit des Spendersystems ausgegeben.

Das erfindungsgemäß vorgesehene Befestigungsmittel ist derart ausgebildet, dass das Spendersystem am Nutzer selbst und/oder dessen Kleidung befestigt werden kann. Das Befestigungsmittel kann beispielsweise ein Clip sein, mit dem der Nutzer das Spendersystem an seinem Hosenbund, seinem Gürtel und/oder an einer Tasche befestigen kann. Alternativ kann das Befestigungsmittel eine Lasche oder Schlaufe sein, durch die z. B. ein Gürtel des Nutzers geführt werden kann. Gemäß einer weiteren Ausführungsform ist das Befestigungsmittel selbst ein Gürtel, so dass sich der Nutzer das Spendersystem mit diesem Gürtel direkt umschnallen kann. Daneben sind aber auch andere Ausführungsformen des Befestigungsmittels möglich. Insbesondere ist die Zahl der Befestigungsmittel nicht auf genau ein Befestigungsmittel beschränkt. Vielmehr kann das Spendersystem auch zwei oder mehr Befestigungsmittel aufweisen, womit ein sicherer Halt des Spendersystems am Nutzer bzw. an dessen Kleidung gewährleistet werden kann. Das Befestigungsmittel ist vorzugsweise direkt an dem Gehäuse des Spendersystems angeordnet. Insbesondere ist das Befestigungsmittel dabei auf einer der Betätigungseinheit gegenüberliegenden Seite des Gehäuses angeordnet, so dass die Betätigungseinheit, wenn der Nutzer das Spendersystem trägt, weiterhin gut zugänglich ist.

Das Befestigungsmittel kann so ausgelegt sein, dass hierdurch eine Vorzugsrichtung vorgegeben ist, in der der Nutzer das Spendersystem an sich trägt. Z. B. kann die Vorzugsrichtung so orientiert sein, dass in der Vorzugsrichtung die Ausgabeeinheit nach unten orientiert ist. Bei einer solchen Orientierung kann für die Ausgabe des Mediums beispielsweise ein Pumpmechanismus eingesetzt werden, wie er aus dem Stand der Technik bereits bekannt ist und der auf dem Einfluss der Gewichtskraft basiert.

Gemäß einer Ausführungsform der Erfindung sind die Ausgabeeinheit und/oder der Behälter mit dem Medium jedoch so ausgebildet, dass das Medium unabhängig von einer Orientierung des Spendersystems ausgebbar ist. So kann eine zuverlässige Ausgabe von Medium sichergestellt werden, insbesondere unabhängig von einer Orientierung des Spendersystems in einer Vorzugsrichtung. Beispielsweise kann sich das Medium in dem Behälter dazu unter Druck befinden.

Insbesondere kann der Behälter mit dem Medium einen Mediencontainer aufweisen, in dem sich das auszugebende Medium befindet. Dabei wird mittels einer elastischen Vorspannung einer elastischen Ummantelung, die den Mediencontainer zumindest teilweise umgibt, ein Druck auf den Mediencontainer ausgeübt. Wird infolge einer Betätigung der Betätigungseinheit des Spendersystems ein Ventil des Mediencontainers geöffnet, führt der auf den Mediencontainer wirkende Druck dazu, dass Medium ausgegeben wird. Die Orientierung des Mediencontainers und des Spendersystems ist dabei nicht maßgeblich dafür, ob Medium ausgegeben wird. Die Ummantelung kann den Mediencontainer beispielsweise bis auf das Ventil, über das Medium ausgegeben wird, vollständig umschließen. D. h. die Ummantelung kann ballonartig ausgebildet sein. Die Ummantelung kann aber auch andere Formen haben. Z. B. kann die Ummantelung eine Schlauchform haben, wobei der Mediencontainer in den Schlauch eingesetzt ist. Konkret kann es sich bei der Ummantelung um einen Schlauch handeln, der aus einem elastomeren Werkstoff wie z. B. Gummi hergestellt ist. In Abhängigkeit von dem gewählten Material für die Ummantelung kann Einfluss darauf genommen werden, welcher Druck auf das Medium in dem Mediencontainer ausgeübt wird. Vorzugsweise liegt der Druck, der von der Ummantelung, wie dem Gummischlauch, auf den Mediencontainer ausgeübt wird, im Bereich von oder oberhalb von 2 bar. Um auch viskose Medien wie ein Gel ausgeben zu können oder um das Medium zerstäuben zu können, kann die Ummantelung aber auch so ausgelegt sein, dass das Medium - im gefüllten Zustand des Mediencontainers - unter einem Druck im Bereich von 7 bar steht.

Eine andere Möglichkeit für eine von der Orientierung unabhängige Ausgabe von Medium ist, dass der Mediencontainer unter Gasdruck steht. Bei einer Betätigung der Betätigungseinheit wird ein Ventil des Mediencontainers geöffnet. Der auf den Mediencontainer wirkende Gasdruck führt dazu, dass Medium aus dem Mediencontainer freigesetzt wird unabhängig von der Orientierung des Spendersystems.

Für einen mobilen Einsatz des Spendersystems ist dieses insbesondere so ausgelegt, dass es nicht zu groß und auch nicht zu schwer ist. Daraus resultieren auch Begrenzungen hinsichtlich der Abmessungen und des Gewichts des Behälters für das Medium und somit auch Begrenzungen hinsichtlich der Menge des Mediums, die ausgegeben werden können. D. h. ein Nutzer muss das Spendersystem regelmäßig durch ein Neues ersetzen. Vorzugsweise muss er dabei jedoch nicht das gesamte Spendersystem wechseln, sondern lediglich den Behälter mit dem Medium. Daher ist gemäß einer Ausführungsform der Erfindung vorgesehen, dass der Behälter mit dem Medium auswechselbar in der Ausnehmung des Gehäuses angeordnet ist. Hierzu kann die Abdeckung gelöst oder relativ zu dem Gehäuse bewegt werden, so dass der Nutzer den entleerten Behälter entfernen und durch einen neuen Behälter ersetzen kann.

Um zu verhindern, dass Unbefugte den Behälter entfernen und/oder austauschen können, kann die Abdeckung an dem Gehäuse verriegelbar sein. Konkret kann die Entriegelung einen speziellen Schlüssel erfordern. Bei dem Schlüssel kann es sich um einen mechanischen Schlüssel handeln. Es kann sich aber auch um einen elektronischen Schlüssel wie einen RFID-Chip o. ä. handeln. Der RFID-Chip oder eine andere Sende-/Empfangseinheiten kann dabei lediglich die Funktion des Schlüssels für die Ver- und Entriegelung der Abdeckung übernehmen. Dieser kann jedoch auch multifunktional eingesetzt werden. Z. B. kann damit gleichzeitig ein Monitoringsystem umgesetzt werden, um eine Nutzung des Spendersystems zu überwachen und/oder auszuwerten. Weiterhin kann so auch eine Personalisierung des Spendersystems realisiert werden, z. B. indem das Spendersystem eine Steuereinheit aufweist, die die Ausgabe von Medium so steuert, dass nur dann Medium ausgegeben wird, wenn die zugehörige Sende-/Empfangseinheit erkannt wird.

Wenn der Behälter auswechselbar in der Ausnehmung aufgenommen ist, muss sichergestellt werden, dass der Behälter dicht mit der Ausgabeeinheit in Verbindung gebracht wird, um einer Leckage von Medium vorzubeugen. Dies kann gelöst werden, indem der Behälter zusammen mit der Ausgabeeinheit ausgetauscht wird, wobei im Vorfeld eine dichte Verbindung zwischen dem Behälter und der Ausgabeeinheit hergestellt wird. Alternativ wird der Behälter mit der Ausgabeeinheit zusammen nach Entleerung gegen einen neuen gefüllten Behälter mit neuer Ausgabeeinheit getauscht. Mit diesem geschlossenen System können Medienrückstände, Verschmutzungen und Verkeimungen im System vermieden werden. Um die Zahl an Einwegartikeln zu reduzieren, wird jedoch vorzugsweise lediglich der Behälter ausgetauscht, während die Ausgabeeinheit fest in oder an dem Gehäuse befestigt bleibt. Um eine dichte Verbindung herzustellen, ist gemäß einer erfindungsgemäßen Ausführungsform eine Führungskulisse in dem Gehäuse und/oder der Abdeckung vorgesehen. Wenn der Behälter mit dem Medium eingesetzt wird und/oder die Ausnehmung mit der Abdeckung verschlossen wird, wird der Behälter von der Führungskulisse derart geführt, dass der Behälter dichtend mit der Ausgabeeinheit verbunden wird. Beispielsweise kann durch die Führungskulisse eine Bewegung des Behälters relativ zu der Ausgabeeinheit so geführt werden, dass eine den Behälter verschließende Membran durchstoßen und gleichzeitig ein ggf. vorhandenes Dichtmittel an die Ausgabeeinheit angepresst wird, wodurch eine dichte Verbindung zu der Ausgabeeinheit geschaffen wird.

Die Betätigungseinheit und die Ausgabeeinheit sind vorzugsweise so nah zueinander angeordnet, dass eine Benutzung des Spendersystems mit einer Hand möglich ist. Gemäß einer Ausführungsform der Erfindung ist die Ausgabeeinheit des Spendersystems daher im Bereich eines Bodens des Gehäuses angeordnet, wobei die Betätigungseinheit ebenfalls im Bereich des Bodens oder in einem dem Boden benachbarten Bereich des Gehäuses, z. B. im Randbereich einer Seiten- oder Vorderwand des Gehäuses, angeordnet ist. Konkret können die Ausgabeeinheit und die Betätigungseinheit so angeordnet sein, dass die Betätigungseinheit mit einem oder mehreren Fingern oder dem Handballen gedrückt werden kann, wobei gleichzeitig mit der Handinnenfläche das infolge der Betätigung ausgegebene Medium aufgefangen werden kann. Je nach Größe des Spendersystems kann eine ergonomische Anordnung der Betätigungseinheit und der Ausgabeeinheit relativ zueinander aber auch erreicht werden, wenn die Ausgabeeinheit im Bereich des Bodens angeordnet ist, während die Betätigungseinheit auf der dem Boden gegenüberliegenden Wand des Gehäuses angeordnet ist.

In weiterer Ausgestaltung kann ein Gegenbetätigungselement vorgesehen sein, welche an einer Wandung des Gehäuses angeordnet ist, die der Wandung gegenüberliegt, an welcher die Betätigungseinheit angeordnet ist. Z. B. kann das Gegenbetätigungselement in Form einer Gegenbetätigungsfläche ausgebildet sein. Dazu kann die Wandung des Gehäuses beispielsweise derart geformt sein, dass eine ergonomische Betätigung der Betätigungseinheit möglich ist. Konkret kann die Wandung dazu gewölbt sein, so dass eine Ballenkuhle gebildet wird, an der der Nutzer bei der Betätigung der Betätigungseinheit z. B. mit den Fingern mit seinem Handballen abstützen kann. Insbesondere kann so eine Gegenkraft gegen die Betätigung der Betätigungseinheit ausgeübt werden, die die Betätigung der Betätigungseinheit besonders einfach macht.

Gemäß einer Ausführungsform der Erfindung ist die Betätigungseinheit derart ausgebildet und angeordnet, dass eine Betätigungsrichtung nicht entgegengesetzt ist zu einer durch das Befestigungsmittel vorgegebenen Befestigungsrichtung. So kann sichergestellt werden, dass das Spendersystem auch bei einer Betätigung des Spendersystems sicher am Nutzer befestigt bleibt. Die Betätigungsrichtung ist dabei die Richtung, in der die Betätigungseinheit betätigt werden muss, damit Medium ausgegeben wird. Die Befestigungsrichtung ist die Richtung, in der das Spendersystem durch das Befestigungsmittel gegenüber einer Verschiebung am Nutzer bzw. dessen Kleidung fixiert ist. Z. B. kann die Befestigungsrichtung durch die Richtung vorgegeben sein, in der eine Anlagefläche des Befestigungsmittels zur Anlage an einen Hosenbund, Gürtel- oder Taschenrand kommt. Idealerweise erfolgt eine Betätigung der Betätigungseinheit dabei in eine Richtung, in der die Anlagefläche eine Verschiebung des Spendersystems verhindert. D. h. idealerweise ist die Betätigungsrichtung gleich der Befestigungsrichtung. Die Betätigungsrichtung kann jedoch auch einen Winkel zu der Befestigungsrichtung aufweisen, solange die Anlagefläche des Befestigungsmittels zumindest nicht wesentlich außer Anlage mit dem Hosenbund, Gürtel- oder Taschenrand kommt. Insbesondere kann die Betätigungseinheit derart ausgebildet und angeordnet sein, dass die Betätigungsrichtung und die Befestigungsrichtung einen Winkel zwischen 0° und 90° einschließen.

Um die Handhabung des Spendersystems weiter zu vereinfachen, ist gemäß einer Ausführungsform der Erfindung vorgesehen, dass die Betätigungseinheit derart ausgebildet und angeordnet ist, dass die Betätigungsrichtung anders orientiert ist als eine Demontagerichtung zum Lösen der Befestigung der Abdeckung an dem Gehäuse oder zum Bewegen der Abdeckung relativ zu dem Gehäuse. Insbesondere wenn die Betätigungseinheit im oder nahe dem Bereich der Abdeckung angeordnet ist, kann so auf einfache Weise verhindert werden, dass versehentlich mit der Betätigung der Betätigungseinheit die Abdeckung gelöst und das Gehäuse geöffnet wird. Z. B. kann die Betätigungsrichtung im Wesentlichen entgegengesetzt oder quer zur Demontagerichtung orientiert sein.

Das Spendersystem kann als berührungslos betätigbares Spendersystem ausgebildet sein. D. h. gemäß einer Ausführungsform der Erfindung weist die Betätigungseinheit einen Sensor zum Erkennen der Annäherung einer Hand und/oder eines Senders, z. B. einen RFID-Chip, auf. Wenn eine Annäherung erkannt wird, wird dies als Betätigung der Betätigungseinheit gewertet, was - gesteuert durch eine Steuereinheit des Spendersystems - zu einer Ausgabe von Medium führt. Insbesondere kann mit einem berührungslos betätigbaren Spendersystem eine ungewollte Ausgabe von Medium verhindert werden. Beispielsweise führt nicht bereits ein Anstoßen der Betätigungseinheit an einen Gegenstand wie eine Tischkante zu einer Ausgabe von Medium, da mit dem Sensor erkannt wird, dass es sich nicht um eine Hand oder einen passenden Sender handelt. Die Verifizierung einer Hand gegenüber einem anderen Gegenstand wie der Tischkante kann mittels eines hierfür geeigneten Sensors erfolgen. Beispielsweise kann hierfür ein Thermosensor oder eine Kamera o. ä. eingesetzt werden. Die Annäherung der Hand kann dabei ebenfalls mit Hilfe einer Kamera erfasst werden. Es können aber auch andere Sensoren, wie optische Sensoren, kapazitive Sensoren u. ä., eingesetzt werden, wie es bereits aus dem Stand der Technik bekannt ist.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einer Ausnehmung die Rede ist, so ist dies so zu verstehen, dass genau eine Ausnehmung, zwei Ausnehmungen oder mehrere Ausnehmungen vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: ein erstes Ausführungsbeispiel eines erfindungsgemäßen Spendersystems;
- Figur 2: ein zweites Ausführungsbeispiel eines erfindungsgemäßen Spendersystems.

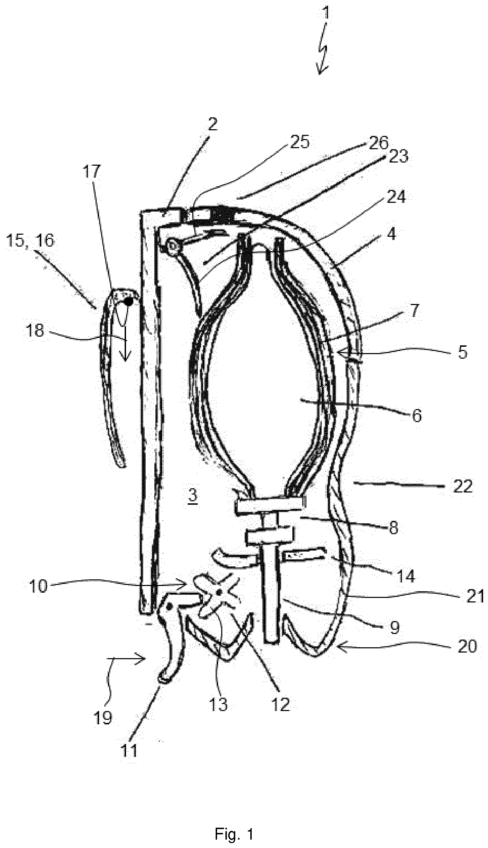

In Figur 1 ist eine Ausführungsform eines erfindungsgemäßen Spendersystems 1 gezeigt, welches manuell betätigbar ist. Das Spendersystem 1 weist ein Gehäuse 2 mit einer darin vorgesehenen Ausnehmung 3 auf. Die Ausnehmung 3 ist mittels einer Abdeckung 4 verschlossen, welche lösbar an dem Gehäuse befestigt ist. So hat man wahlweise Zugriff zu der Ausnehmung 3 und den darin vorgesehenen weitere Komponenten.

Wie in Figur 1 gezeigt, ist in der Ausnehmung 3 ein Behälter 5 vorgesehen, welcher das mit dem Spendersystem ausgebbare Medium enthält. Der Behälter 5 für das Medium weist zum einen einen Mediencontainer 6 und zum anderen eine Ummantelung 7 auf. Beispielsweise kann es sich bei der Ummantelung 7 um einen Gummischlauch handeln, in den der Mediencontainer 6 eingesetzt ist und der aufgrund seiner elastischen Vorspannung einen Druck auf den Mediencontainer 6 und das darin enthaltene Medium ausübt. Um Medium ausgeben zu können, weist der Mediencontainer 6 endseitig ein Ventil 8 auf, welches von einer geschlossenen Stellung in seine geöffnete Stellung überführt werden kann. In der geöffneten Stellung kann aufgrund des auf den Mediencontainer 6 wirkenden Drucks Medium durch das Ventil 8 ausgegeben werden. Insbesondere kann das Medium unabhängig von der Orientierung des Spendersystems 1 ausgegeben werden.

Das Medium wird dabei von einer Ausgabeeinheit 9 des Spendersystems ausgegeben, welches bei dem gezeigten Ausführungsbeispiel als ein rohrartiger Stutzen ausgebildet ist, der mit dem Ventil 8 in Verbindung steht.

Ferner weist das Spendersystem 1 eine Betätigungseinheit 10 auf. Bei dem in Figur 1 gezeigten Ausführungsbeispiel handelt es sich um eine manuell betätigbare Betätigungseinheit 10. Diese umfasst einen Betätigungshebel 11, welcher verschwenkbar an dem Gehäuse 2 befestigt ist und welchen ein Nutzer des Spendersystems 1 z. B. mit seinen Fingern betätigen kann. Weiter umfasst die Betätigungseinheit 10 ein drehbar angeordnetes Dosierrad 12, welches vier im Kreis angeordnete und jeweils radial abstehende Schenkel 13 unterschiedlicher Länge aufweist. Der Betätigungshebel 11 greift dabei zwischen zwei Schenkel 12, so dass eine Betätigung des Betätigungshebels 11 zu einer Drehung des Dosierrads 12 führt. Die Drehung des Dosierrads 12 führt dabei zu einer translatorischen Bewegung eines Betätigungselements 14 der Betätigungseinheit 10, welches mit dem Ventil 8 gekoppelt ist. Dabei wird mit einer translatorischen Bewegung des Betätigungselements 14 das Ventil 8 von seiner geschlossenen Stellung in seine geöffnete Stellung überführt, in der Medium ausgegeben werden kann.

Je nach Ausrichtung des Dosierrads 12 können unterschiedliche Schenkel 13 des Dosierrads 12 mit dem Betätigungselement 14 in Kontakt gebracht werden. Da die Schenkel 13 unterschiedlich lang sind, ist die bei der jeweils ausgelösten translatorischen Bewegung ausgeführte Wegstrecke unterschiedlich lang. Entsprechend ändert sich auch der freie Öffnungsquerschnitt des Ventils 8 in der geöffneten Stellung und/oder die Öffnungsdauer des Ventils 8. Insgesamt kann also mittels der Ausrichtung des Dosierrads 12 die Dosierung des Mediums verändert werden.

Auf der der Abdeckung 4 gegenüberliegenden Seite des Gehäuses 2 ist ein Befestigungsmittel 15 in Form eines Clips 16 vorgesehen. Mit dem Clip 16 kann ein Nutzer das Spendersystem 1 z. B. an seinem Hosenbund oder einer Hosen- oder Kitteltasche befestigen, so dass der Nutzer das Spendersystem 1 immer mit sich tragen kann. Der Clip 16 bildet dabei eine Anlagefläche 17 aus, mit der der Clip 16 an dem Hosenbund oder der Hosen- oder Kitteltasche anliegt, aus. Durch die Anlagefläche 17 wird dabei eine Befestigungsrichtung 18 des Befestigungsmittels 15 definiert, die quer zu der Anlagefläche 17 orientiert ist und die die Richtung anzeigt, in der das Spendersystem 1 durch das Befestigungsmittel 15 gegenüber einer Verschiebung gegenüber der Kleidung des Nutzers fixiert ist, an welcher das Spendersystem 1 befestigt ist.

Die Befestigungsrichtung 18 ist bei dem gezeigten Ausführungsbeispiel in etwa quer zur Betätigungsrichtung 19 orientiert, in die die Betätigungseinheit 10 bzw. der Betätigungshebel 11 betätigbar ist. So kann verhindert werden, dass sich das Spendersystem 1 bei einer Betätigung der Betätigungseinheit 10 versehentlich von der Kleidung löst und ggf. auf den Boden fällt.

Bei dem gezeigten Ausführungsbeispiel ist die Ausgabeeinheit 9 im Bereich eines Bodens 20 des Gehäuses 2 angeordnet. Auch die Betätigungseinheit 10 ist im Bereich des Bodens 20 bzw. in einem Randbereich einer angrenzenden Wandung angeordnet. So kann ein Nutzer auf besonders einfache und ergonomische Weise zum einen die Betätigungseinheit 10 betätigen und zum anderen das infolge der Betätigung ausgegebene Medium auffangen. Um zusätzliche Ergonomie zu bieten, ist eine vordere Wandung 21, welcher der Wandung, in deren Randbereich die Betätigungseinheit angeordnet ist, mit einer Wölbung versehen. Diese Wölbung dient als eine Art Gegenbetätigungsfläche. Insbesondere ist eine Ballenkuhle 22 ausgebildet, welche entsprechend dem Handballen eines Nutzers geformt ist. Der Abstand zwischen der Ballenkuhle 22 und dem Betätigungshebel 11 ist dabei so gewählt, dass der Nutzer das durch die Ausgabeeinheit 9 ausgegebene Medium sicher mit seiner Handinnenfläche auffangen kann.

Weiterhin weist das in Figur 1 gezeigte Spendersystem 1 eine Füllstandsanzeige 23 auf, mittels der auf einfache Weise abgelesen werden kann, wenn der Behälter 5 entleert ist und durch einen neuen ersetzt werden muss. Die Füllstandsanzeige 23 ist bei dem gezeigten Ausführungsbeispiel als ein in etwa V-förmiges Element Element ausgebildet, welches verschwenkbar an dem Gehäuse 2 des Spendersystems 1 befestigt ist. Ein Schenkel 24 der Füllstandsanzeige 23 steht in Kontakt mit dem Behälter 5 für das Medium. Der andere Schenkel 25 der Füllstandsanzeige 23 ragt unter einem Winkel von dem Schenkel 24 in Richtung eines Sichtfensters 26 in der Abdeckung 4 ab. Im Bereich der Spitze des Schenkels 25 kann z. B. eine rote Markierung oder ähnliches vorgesehen sein. Wenn der Behälter 5 mit dem Medium gefüllt ist, wird die Füllstandanzeige 23 entgegen der Kraft eines in Figur 1 nicht gezeigten Federelements in eine Position geschwenkt, in der der Schenkel 25 maximal weit von dem Sichtfenster 26 entfernt ist. Entsprechend ist die rote Markierung nicht oder nur schlecht durch das Sichtfenster 26 sichtbar. Wenn sich der Behälter 5 mit dem Medium entleert, bewirkt dies, dass sich der Behälter 5 zusammenzieht. Dies führt dazu, dass die Füllstandsanzeige 23 aufgrund der auf sie wirkenden Federkraft zunehmend in eine Richtung verschwenkt wird, in der der Schenkel 25 durch das Sichtfenster 26 sichtbar wird. Wenn der Behälter 5 vollständig entleert ist, liegt der Schenkel 25 mit seiner Spitze am Sichtfenster an. Ein Nutzer kann so auf einfache Weise erkennen, dass der Behälter 5 entleert ist und ausgetauscht werden muss.

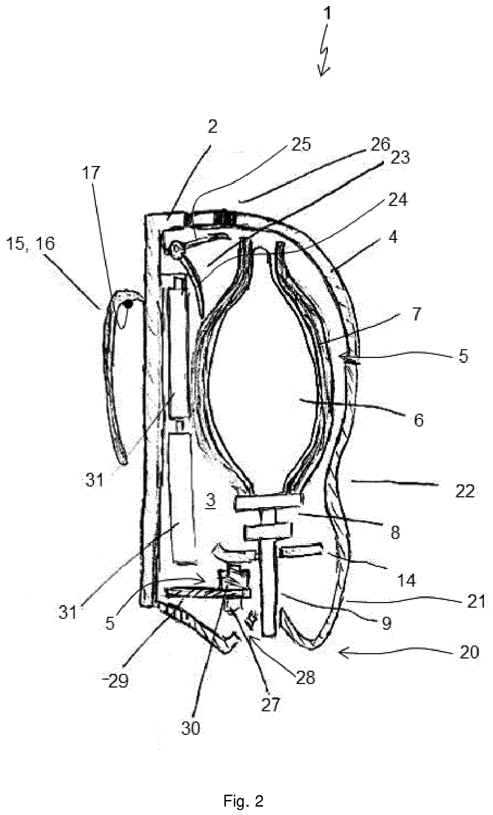

Die in Figur 2 gezeigte Ausführungsform unterscheidet sich von der in Figur 1 gezeigten Ausführungsform darin, dass es sich um ein automatisches Spendersystem handelt, welches nicht manuell betätigt wird, sondern eine automatische Betätigungseinheit 10 aufweist. Die Betätigungseinheit 10 weist hierfür einen Sensor 27 auf. Mit diesem kann z. B. die Annäherung einer Hand oder eines Senders erfasst werden.

Konkret ist der Sensor 27 bei dem in Figur 2 gezeigten Ausführungsbeispiel als ein optischer Sensor ausgebildet, mit dem erfasst werden kann, ob sich eine Hand in dem Bereich der Ausgabeeinheit 9 befindet. Hierzu weist der Sensor 27 ein lichtemittierendes Mittel auf, welches Licht durch eine in dem Gehäuse 2 vorgesehene Öffnung 28 emittiert. Außerdem weist der Sensor 27 einen Detektor auf, mit dem von einer Hand reflektiertes Licht detektiert werden kann, so dass erkannt werden kann, wenn sich im Bereich der Ausgabeeinheit 9 eine Hand befindet. Der Sensor 27 ist mit einer Steuereinheit 29 verbunden, welche in Abhängigkeit von dem Sensorsignal ein Steuersignal für einen Aktuator 30 ausgibt. Der Aktuator 30 bewegt das Betätigungselement 14 translatorisch, so dass das Ventil 8 in seine geöffnete Stellung zu überführt wird, in der Medium durch die Ausgabeeinheit 9 ausgegeben wird.

Zur elektrischen Versorgung des Sensors 27, der Steuereinheit 29 und des Aktuators 30 ist in der Ausnehmung 3 in dem Gehäuse 2 eine lediglich schematisch dargestellte Energieversorgungseinheit 31 angeordnet. Es kann sich hierbei zum Beispiel um Energiespeicher in Form von Batterien oder Akkus handeln. Die Energieversorgungseinheit 31 ist dabei derart in dem Gehäuse 2 angeordnet, dass diese - ggf. nach vorherigem Entfernen des Behälters 5 - leicht ausgetauscht werden kann.

### Bezugszeichenliste:

- 1: Spendersystem
- 2: Gehäuse
- 3: Ausnehmung
- 4: Abdeckung
- 5: Behälter
- 6: Mediencontainer
- 7: Ummantelung
- 8: Ventil
- 9: Ausgabeeinheit
- 10: Betätigungseinheit
- 11: Betätigungshebel
- 12: Dosierrad
- 13: Schenkel
- 14: Betätigungselement
- 15: Befestigungsmittel
- 16: Clip
- 17: Anlagefläche
- 18: Befestigungsrichtung
- 19: Betätigungsrichtung
- 20: Boden
- 21: Wandung
- 22: Ballenkuhle
- 23: Füllstandsanzeige
- 24: Hebel
- 25: Hebel
- 26: Sichtfenster
- 27: Sensor
- 28: Öffnung
- 29: Steuereinheit
- 30: Aktuator
- 31: Energieversorgungseinheit

## Patentansprüche

1. Spendersystem (1) zum Ausgeben eines flüssigen, pastösen oder aufschäumbaren Mediums zur Hautreinigung und/oder Hautpflege in Abhängigkeit von einer Betätigung des Spendersystems (1), mit
- einem Gehäuse (2), das eine Ausnehmung (3) für einen Behälter (5) mit dem Medium aufweist,
- einer Abdeckung (4), die an dem Gehäuse (2) beweglich und/oder lösbar befestigt ist und die Ausnehmung (3) für den Behälter (5) mit dem Medium abdeckt,
- einer Betätigungseinheit (10), die durch einen Nutzer des Spendersystems (1) betätigbar ist, um Medium ausgeben zu lassen,
- einer Ausgabeeinheit (9), durch die das Medium in Abhängigkeit von einer Betätigung der Betätigungseinheit (10) ausgebbar ist,
**dadurch gekennzeichnet, dass**
das Spendersystem (1) ein Befestigungsmittel (15) aufweist, das derart ausgebildet ist, dass das Spendersystem (1) am Nutzer und/oder an dessen Kleidung befestigbar ist.

2. Spendersystem (1) nach Anspruch 1,
**dadurch gekennzeichnet, dass**
die Ausgabeeinheit (9) und/oder der Behälter (5) mit dem Medium derart ausgebildet sind/ist, dass das Medium unabhängig von einer Orientierung des Spendersystems (1) ausgebbar ist.

3. Spendersystem (1) nach Anspruch 2,
**dadurch gekennzeichnet, dass**
der Behälter (5) mit dem Medium
- einen Mediencontainer (6) und
- eine elastische Ummantelung (7), die den Mediencontainer (6) zumindest teilweise umgibt und zumindest in einem gefüllten Zustand des Mediencontainers (6) durch eine elastische Vorspannung einen Druck auf den Mediencontainer (6) ausübt,
aufweist.

4. Spendersystem (1) nach einem der vorhergehenden Ansprüche,
**dadurch gekennzeichnet, dass**
der Behälter (5) mit dem Medium auswechselbar in der Ausnehmung (3) des Gehäuses (2) aufgenommen ist.

5. Spendersystem (1) nach Anspruch 4,
**dadurch gekennzeichnet, dass**
in dem Gehäuse (2) und/oder der Abdeckung (4) eine Führungskulisse vorgesehen ist, die den Behälter (5) mit dem Medium beim Einsetzen des Behälters (5) in die Ausnehmung (3) und/oder Verschließen der Ausnehmung (3) mit der Abdeckung (4) derart führt, dass der Behälter (5) dichtend mit der Ausgabeeinheit (9) verbindbar ist.

6. Spendersystem (1) nach einem der vorhergehenden Ansprüche,
**dadurch gekennzeichnet, dass**
die Ausgabeeinheit (9) im Bereich eines Bodens (20) des Gehäuses (2) angeordnet ist und die Betätigungseinheit (10) ebenfalls im Bereich des Bodens (20) oder in einem dem Boden (20) benachbarten Bereich des Gehäuses (2) angeordnet ist.

7. Spendersystem (1) nach einem der vorhergehenden Ansprüche,
**dadurch gekennzeichnet, dass**
die Betätigungseinheit (10) im Bereich einer Wandung des Gehäuses (2) angeordnet ist und auf einer gegenüberliegenden Wandung des Gehäuses (2) ein Gegenbetätigungselement angeordnet ist.

8. Spendersystem (1) nach einem der vorhergehenden Ansprüche,
**dadurch gekennzeichnet, dass**
die Betätigungseinheit (10) derart ausgebildet und angeordnet ist, dass eine Betätigungsrichtung (19), in die die Betätigungseinheit (10) zum Ausgeben von Medium betätigbar ist, nicht entgegensetzt ist zu einer durch das Befestigungsmittel (15) vorgegebenen Befestigungsrichtung (18).

9. Spendersystem (1) nach Anspruch 8,
**dadurch gekennzeichnet, dass**
die Betätigungseinheit (10) derart ausgebildet und angeordnet ist, dass die Betätigungsrichtung (19) unter einem Winkel zwischen 0° und 90° relativ zu der Befestigungsrichtung (18) orientiert ist.

10. Spendersystem (1) nach einem der vorhergehenden Ansprüche,
**dadurch gekennzeichnet, dass**
die Betätigungseinheit (10) derart ausgebildet und angeordnet ist, dass eine/die Betätigungsrichtung (19) anders orientiert ist als eine Demontagerichtung zum Lösen der Befestigung der Abdeckung (4) an dem Gehäuse (2) oder zum Bewegen der Abdeckung (4) relativ zu dem Gehäuse (2).

11. Spendersystem (1) nach einem der vorhergehenden Ansprüche,
**dadurch gekennzeichnet, dass**
die Betätigungseinheit (10) einen Sensor (27) zum Erkennen der Annäherung einer Hand und/oder eines Senders aufweist.
